# EUROPEAN PATENT APPLICATION

(11) **EP 4 570 625 A1**
(43) Date of publication of application: **18.06.2025**
(21) Application number: 24020344.8
(22) Date of filing: 11.12.2024
(51) Int. Cl.: B62D 13/04, B62D 53/00, B62D 53/06

(54) **INTERMEDIATE TRAILER**

(30) Priority: 13.12.2023 NL 1044758
(71) Applicant: Groep Jumbo Groenewegen B.V., 5708 JZ Helmond (NL)
(72) Inventor: Braspenning, Niels Johannes Arnoldus, 4871LM Etten-Leur (NL)
(74) Representative: Patentwerk B.V.

(57) **Abstract**

An intermediate trailer (130; 200) has a king pin (134) and a disc (133), three axles (210, 220, 230), and pivotable wheels (211, 212, 221, 222) on the two rearmost axles (210, 220).

The relationship FAD > RAD applies, in which FAD indicates the front axle distance, defined as the longitudinal distance between the middle axle (220) and the frontmost axle (230), and RAD indicates the rear axle distance, defined as the longitudinal distance between the middle axle (220) and the rearmost axle (210). Further, the pivot axis of each pivoting wheel is substantially aligned with the inner side face of the corresponding wheel. Further, the wheels of the intermediate trailer are controlled to pivot such that the path followed by the centre of disc (133) has substantially the same radius of curvature as the path followed by the kingpin (134).

## Description

### FIELD OF THE INVENTION

The present invention relates in general to an intermediate trailer, also known in the field as "B-Double".

### BACKGROUND OF THE INVENTION

In road transport, a classical combination for a transport vehicle is a motorized towing truck followed by a trailer. The trailer has a wheel set at its rear end, while its front end is resting on the rear end of the towing truck, also indicated as tractor. The coupling between the trailer's front end and the tractor's rear end involves a coupling disc mounted on the tractor's rear end, also indicated as fifth wheel, and a pin mounted under the trailer's front end and engaging in said disc, also indicated as king pin.

In this patent application, the phrase "vehicle unit" will be used to indicate a portion of the transport combination between hinge joints. The unit itself is considered to be rigid. In the above-indicated classical combination, the tractor is a unit and the trailer is a unit, i.e. such combination has two units and one hinge.

One development for increasing the efficiency of a transport combination is to increase the number of units in the combination. One tractor can pull two or more trailers. A unit between the leading unit (i.e. tractor) and the rear unit is, by reference to its position in the combination, indicated here as an intermediate unit or intermediate trailer.

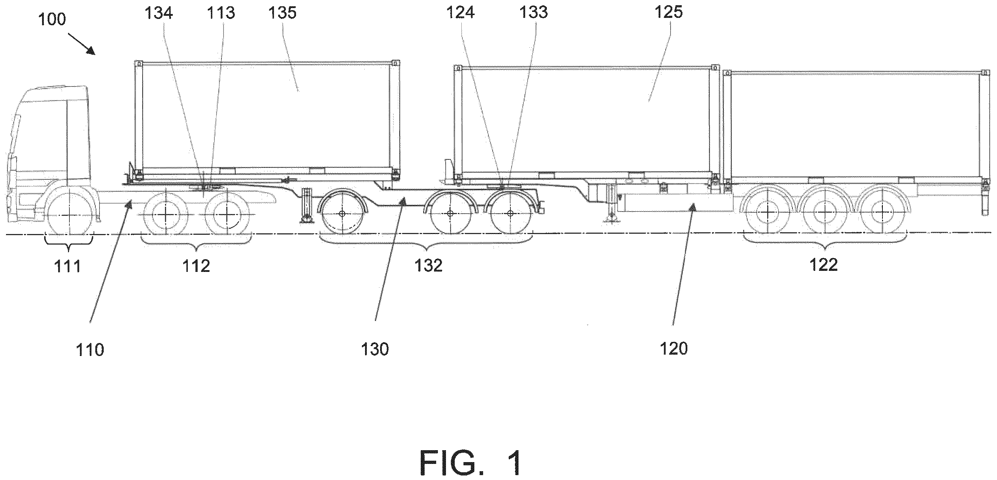

Figure 1 schematically illustrates such transport combination 100. The tractor is indicated at 110, with front wheel set 111 (here shown as one axle) and rear wheel set 112 (here shown as two axles), and a coupling disc 113.

The rear trailer is indicated at 120, with rear wheel set 122, in the example shown consisting of three wheel axles.

In between the tractor 110 and the rear trailer 120 is intermediate trailer 130. The figure shows that a front portion of the intermediate trailer 130 is designed for carrying load, for instance in the form of a platform for receiving exchangeable containers 135. At the front portion, the intermediate trailer 130 has a king pin 134 coupled to the coupling disc 113 of the tractor 110. At a rear portion, the intermediate trailer 130 has a wheel set 132 and a coupling disc 133, to which the king pin 124 of the rear trailer 120 is coupled.

Likewise, the rear trailer 120 may be designed for receiving exchangeable containers 125. Notably, the rear trailer 120 can be coupled to the tractor 110 directly, which would constitute a classical combination. In comparison, the combination of figure 1 has greatly increased transportation capacity. For being able to accommodate as high a load as possible, the rear wheel set 122 of the rear trailer 120 may comprise three wheel axles, as shown, and in such case, the second wheel axle will often be equidistant in between the first wheel axle and the third wheel axle.

### SUMMARY OF THE INVENTION

Since the intermediate trailer 130 is also known as "B-Double", the transport combination 100 of figure 1 will also be indicated as "B-Double combination".

One problem of B-Double combination is manoeuvrability. Whenever such transport combination needs to deviate from a straight path, the respective wheels of the trailers tend to move to the inside of the curve travelled by the wheels of the tractor 110. This already applies to a single-trailer combination, but applies stronger if a tractor pulls more trailers: in general, each trailing unit will tend to move to the inside of the curve more than its respective pulling unit, or in more exact terms: the radius of the path travelled by the wheels of each trailing unit will be smaller than the radius of the path travelled by the wheels of the respective pulling unit.

To reduce this tendency, it is known to have the wheels of the rearmost axles of the intermediate trailer 130 be controllably steered. A pickup device mounted at the joint 113/134 senses the angle between the longitudinal direction of the tractor 110 and the longitudinal direction of the intermediate trailer 130, which angle is indicated here as the control angle. The pickup device controls the steering angle of the respective wheels such that the steering angle increases with increasing control angle. The steering is controlled such that the rear end of the intermediate trailer 130 is forced towards to outside of the curve (as compared to the path followed without steering), causing in turn the front of the rear trailer 120 to be forced towards to outside of the curve.

As a consequence of the wheels being steered, they do not remain in place, or put differently, they require more space as compared to wheels of which the rotation axis is perpendicular to the vehicle's longitudinal axis at all times. This has consequences for the accepted range of longitudinal positions of the axles. If the rearmost axle is displaced forward, the longitudinal position of the coupling disc with respect to the wheel axles is effectively displaced to the rear, which translates to a reduction in load capabilities.

Another problem is an acceptable load, or distribution of load, over the various wheel axles in different loading situations. The vehicle should be designed to be able to accommodate very different loading situations in a safe manner.

In one extreme loading situation, the load 125 of the rear trailer 120 is very heavy and the load 135 of the intermediate trailer 130 is light or even absent. In B-Double combinations according to existing designs, the large down-pressure on the disc 133 of the intermediate trailer 130 tends to tilt the intermediate trailer 130 backwards such that negative down-pressure, i.e. lift, is exerted on the disc 113 of the tractor 110. This may result in unpredictable responses to steering and braking.

In another extreme situation, the load 135 of the intermediate trailer 130 is very heavy and the load 125 of the rear trailer 120 is light or even absent, or even the entire rear trailer 120 is absent. In B-Double combinations according to existing designs, the large down-pressure on the disc 113 of the tractor 110 may result in a too heavy loading of the wheel axles of the tractor 110. Apart from being illegal, the tractor's tires may be subjected to increased wear, and may even fail.

An objective of the present invention is to solve or at least reduce the above-mentioned problems. Therefore, an intermediate trailer according to the present invention has the features specified in claim 1. Particular embodiments are defined in the dependent claims.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
Figure 1 schematically shows a side view of a B-Double combination;
Figures 2A and 2B schematically show a top view and a side view, respectively, of a B-Double combination in accordance with the present invention;
Figure 3 is a schematic cross section to illustrate the positioning of a pivoting wheel on its respective axle.

### DETAILED DESCRIPTION OF THE INVENTION

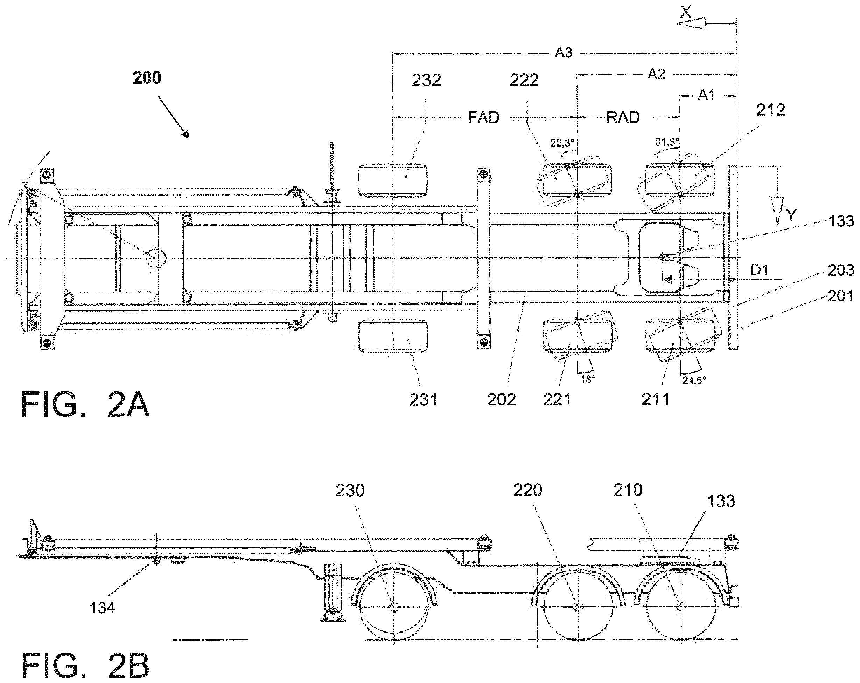

Figures 2A and 2B schematically show a side view and a top view of an example of an intermediate trailer 200 according to the present invention. A system of XYZ coordinates will be taken with the X-axis along the longitudinal direction of the trailer 200, the Y-axis along the width direction, and the Z-axis along the height direction, i.e. perpendicular to the plane of drawing.

The intermediate trailer 200 has three wheel axles. This is to say that the number of axles is equal to three. The axle closest to the rear extremity 201 of the vehicle will be indicated as rearmost axle 210. In this embodiment, the rearmost axle 210 is fixed with respect to the vehicle's chassis 202, but it is noted that some aspects of the present invention can also be achieved with steering axles. At the respective ends of the rearmost axle 210, wheels 211, 212 are mounted, such that they can individually and independently pivot with respect to a substantially vertical pivot axis (steerable). A mechanism for controlling the pivoting is not shown in the figures. The longitudinal distance between the rearmost axle 210 and the rear extremity 201 will be indicated as A1.

The axle most remote from the rear extremity 201 of the vehicle, and closest to the kingpin 134, will be indicated as frontmost axle 230. The frontmost axle 230 is fixed with respect to the vehicle's chassis 202. At the respective ends of the frontmost axle 230, fixed wheels 231, 232 are mounted, i.e. these wheels can not pivot (non-steerable). These wheels can, however, be lifted. The longitudinal distance between the frontmost axle 230 and the rear extremity 201 will be indicated as A3.

The axle in between the rearmost axle 210 and the frontmost axle 230 will be indicated as middle axle 220. Like the rearmost axle 210, the middle axle 220 is fixed with respect to the vehicle's chassis 202. At the respective ends of the middle axle 220, wheels 221, 222 are mounted, such that they can individually and independently pivot with respect to a substantially vertical pivot axis. A mechanism for controlling the pivoting is not shown in the figures. The longitudinal distance between the middle axle 220 and the rear extremity 201 will be indicated as A2.

The longitudinal distance between the middle axle 220 and the rearmost axle 210 will be indicated as the rear axle distance RAD = A2 - A1.

The longitudinal distance between the middle axle 220 and the frontmost axle 230 will be indicated as the front axle distance FAD = A3 - A2.

It is noted that in the above, for sake of convenience, the rear extremity 201 of the vehicle was taken as reference for the positioning of the axles. It should however be clear that the selection of such reference has no influence on the calculation of RAD and FAD.

In prior art B-Double trailers, the wheel set 132 usually has a symmetrical design in the sense that RAD and FAD are substantially equal.

It is an aspect of the design of the present invention that FAD is substantially larger than RAD. In any case, FAD/RAD ≥ 1.1 should apply, and preferably, FAD/RAD ≥ 1.2 applies. In an exemplary design, FAD=2m47 and RAD=1m37, so that FAD/RAD ≥ 1.8 applies. In another exemplary design, FAD=2m53 and RAD=1m31, so that FAD/RAD ≥ 1.93 applies.

In conjunction with the above-mentioned preferred ratios, the rearmost axle 210 is preferably placed as far to the rear as possible, i.e. A1 is as small as possible, and the middle axle 220 is preferably placed as close to the rearmost axle 210 as possible, i.e. A2 is as small as possible. As result, the disc 133 is positioned well in front of the rearmost axle 210; or, in other words, the (centre of the) disc is positioned as close as possible to the position halfway between the rearmost axle 210 and the middle axle 220. The weight of the rear trailer 120 is accommodated well by the rearmost axle 210 and the middle axle 220 together so that lift at the kingpin 134 is prevented.

Further, the frontmost axle 230 is preferably placed as far to the front as possible, i.e. A3 is as large as possible. As result, the frontmost axle 230 contributes more in accommodating the load 135 on the intermediate trailer 130, i.e. the load bearing is taken away from the tractor 110 as much as possible.

The longitudinal distance between the centre of the coupling disc 133 and the rear extremity 201 is indicated as D1. D1 may amount to about 90 cm.

According to a further aspect of the present invention, A1 < D1 applies. Alternatively, it can be said that the longitudinal position of the centre of the coupling disc 133 is between the longitudinal positions of the rearmost axle 210 and middle axle 220. It can also be said that D1 - A1 is as large as possible. In a possible embodiment, D1 - A1 is about 25 cm, or even larger. In a possible embodiment, A1 equals about 65 cm.

As a result, the weight of any trailer 120 bears on the disc 133 well in front of the rearmost axle 210, without any tendency of lifting the front end of the intermediate trailer 200. Even if there would be no container 135 loaded on the intermediate trailer, there is still sufficient downforce onto the tractor 110.

If the intermediate trailer 200 is without load 135, or with relatively moderate load, it is possible to lift the frontmost axle 230 so that the wheel base (i.e. the longitudinal distance from the kingpin 134 to the centre of the wheels standing on the ground) is as long as possible. If the load 135 on the intermediate trailer 200 is heavy, the frontmost axle 230 can be lowered such as to carry weight and make the wheel base be as short as possible.

According to a further preferred aspect of the present invention, the pivot axis of each wheel 211, 212, 221, 222 intersects the corresponding wheel axle 210, 220 as far away from the centre of the corresponding wheel axle 210, 220 as possible.

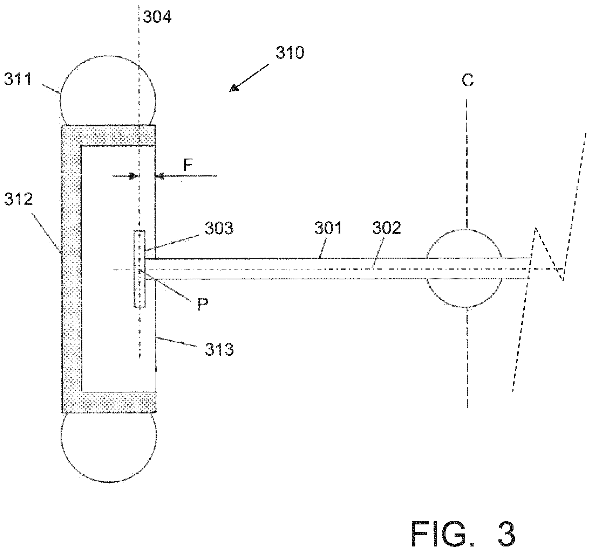

Figure 3 is a schematic cross section to illustrate the positioning of the pivoting wheels on their respective axles. Character C represents the widthwise centre of the intermediate trailer 200. Reference numeral 301 represents a wheel axle having an axis 302. A pivotable wheel 310 is mounted at the free end of the axle 301. Reference numeral 303 represents a pivot structure, of which design details are omitted. Reference numeral 304 represents the corresponding pivot axis, which is substantially vertical.

The wheel 310 comprises a tire 311 mounted on a rim 312. At its side closest to the centre C, the rim 312 has an inner edge 313.

The figure illustrates a preferred situation. The pivot axis 304 intersects the wheel axis 302 at a point P. Point P may coincide with a virtual plane described by the wheel's inner edge 313, but preferably P is located inside the wheel, i.e. beyond the inner edge 313 as seen from the centre C. The distance F from point P to the inner edge 313 is preferably as large as possible, in a range from 2 to 5 cm. Nevertheless, some tolerance is acceptable, and F may even be a few centimetres negative.

By positioning the pivot axis as far outward as possible, or as close to the actual wheel as possible, it is possible to achieve larger steering angles without the wheel hitting parts of the vehicle. The figure shows a possible steering condition when the inner wheel of the rearmost axle 210 is at an angle of 32°, with the outer wheel of the rearmost axle 210 being at an angle of more than 24° and the wheels of the middle axle 220 being at angles of 22° and 18°, respectively, all without hitting the chassis 202 or a rear transverse beam 203 of the chassis 202. In practice, the inner wheel of the rearmost axle 210 can even have a steering angle of 35°.

The exact design of a mechanism for controlling the steering of the wheels of the intermediate trailer is of no relevance to the present invention; such mechanisms are known per se. They include a sensor for sensing the control angle between the longitudinal axis of the towing tractor 110 and the longitudinal axis of the intermediate trailer 200. They further include a pivot drive for pivoting each wheel. What is relevant is the steering function of the control. For each controlled wheel, the steering function is the pivot angle or steering angle of the wheel as a function of the control angle. The precise steering functions will depend on the precise dimensioning of the intermediate trailer 200. Yet, the steering functions are such that, whenever the combination is made to follow a path of constant curvature, the path followed by the centre of disc 133 of the intermediate trailer 130; 200, corresponding to the king pin 124 of the rear trailer 120, has substantially the same radius of curvature as the path followed by the king pin 134 of the intermediate trailer 130; 200. Some tolerance is acceptable, but preferably the deviation is less than 1% (plus or minus), more preferably less than 0.75%, of the path radius of the king pin 134. As a result, the king pin of the rear trailer 120 will substantially follow the same path as if the disc 113 of the tractor, i.e. the rear trailer 120 will substantially follow the same path as if that trailer were coupled directly to the disc 113 of the tractor,

In order to avoid possible misunderstandings, since the number of wheel axles is equal to three, the middle axle is the axle immediately in front of the rearmost axle, and the frontmost axle is the axle immediately in front of the middle axle. These axles may also be indicated as first axle, second axle, third axle, as numbering consecutive neighbouring axles from rear to front.

It should be clear to a person skilled in the art that the present invention is not limited to the exemplary embodiments discussed above, but that several variations and modifications are possible within the protective scope of the invention as defined in the appending claims. Even if certain features are recited in different dependent claims, the present invention also relates to an embodiment comprising these features in common. Even if certain features have been described in combination with each other, the present invention also relates to an embodiment in which one or more of these features are omitted. Features which have not been explicitly described as being essential may also be omitted. Any reference signs in a claim should not be construed as limiting the scope of that claim.

## Claims

1. Intermediate trailer (130; 200) comprising a front portion with a king pin (134) and a rear portion with a coupling disc (133) for receiving a king pin (124) of a rear trailer (120);
wherein the intermediate trailer (130; 200) has a wheel set (132) comprising three wheel axles, wherein the number of wheel axles is equal to three, namely:
a frontmost axle (230) having fixed wheels (231, 232);
a rearmost axle (210) having steerable wheels (211, 212);
a middle axle (220) having steerable wheels (221, 222) and arranged between the rearmost axle (210) and the frontmost axle (230);
wherein the relationship FAD > RAD applies, in which
FAD indicates the front axle distance, defined as the longitudinal distance between the middle axle (220) and the frontmost axle (230);
RAD indicates the rear axle distance, defined as the longitudinal distance between the middle axle (220) and the rearmost axle (210).

2. Intermediate trailer according to claim 1, wherein FAD/RAD ≥ 1.1 applies.

3. Intermediate trailer according to claim 1, wherein FAD/RAD ≥ 1.2 applies.

4. Intermediate trailer according to claim 1, wherein FAD/RAD ≥ 1.8 applies.

5. Intermediate trailer according to claim 1, wherein FAD/RAD ≥ 1.9 applies.

6. Intermediate trailer according to any of the previous claims, wherein the longitudinal position of the centre of the coupling disc (133) is as close as possible to the middle between the longitudinal positions of the middle axle (220) and the rearmost axle (210).

7. Intermediate trailer according to any of the previous claims, wherein the wheels (211, 212) of the rearmost axle (210) are mounted at respective ends of the rearmost axle (210) such that they can individually and independently pivot with respect to a substantially vertical pivot axis.

8. Intermediate trailer according to claim 7, wherein the pivot axis (304) of each wheel (211, 212) of the rearmost axle (210) intersects the corresponding wheel axis at a point (P) located close to the corresponding wheel or even within the wheel (211, 212).

9. Intermediate trailer according to claim 8, wherein said point (P) is located less than 2 cm before, or up to 5 cm beyond, the inner edge (313) of the wheel's rim (312), as seen from the centre (C) of the corresponding axle.

10. Intermediate trailer according to any of the previous claims, wherein the wheels (221, 222) of the middle axle (220) are mounted at respective ends of the middle axle (220) such that they can individually and independently pivot with respect to a substantially vertical pivot axis.

11. Intermediate trailer according to claim 10, wherein the pivot axis (304) of each wheel (221, 222) of the middle axle (220) intersects the corresponding wheel axis at a point (P) located close to the corresponding wheel or even within the wheel (221, 222).

12. Intermediate trailer according to claim 11, wherein said point (P) is located less than 2 cm before, or up to 5 cm beyond, the inner edge (313) of the wheel's rim (312), as seen from the centre (C) of the corresponding axle.

13. Intermediate trailer according to any of the previous claims, wherein the longitudinal position of the centre of the coupling disc (133) is between the longitudinal positions of the rearmost axle (210) and middle axle (220).

14. Intermediate trailer according to claim 13, wherein the longitudinal distance between the centre of the coupling disc (133) and the rearmost axle (210) is at least 20 cm, preferably at least 25 cm.

15. Intermediate trailer according to any of the previous claims, further comprising a control mechanism for controlling the pivot angle of each of said pivoting wheels (211, 212, 221, 222), wherein the control mechanism comprises:
a sensor for sensing a control angle between the longitudinal axis of a towing tractor (110) and the longitudinal axis of the intermediate trailer (130; 200);
a pivot drive for pivoting each of said pivoting wheels (211, 212, 221, 222), wherein the pivot drive receives a sense signal from the sensor;
wherein the pivot drive is adapted to control the pivot angles of the respective wheels as a function of the control angle sensed by the sensor such that, in use, the radius of curvature of the path followed by the centre of the disc (133) of the intermediate trailer (130; 200) deviates less than 1% from the radius of curvature of the path followed by the kingpin (134) of the intermediate trailer (130; 200).
